# EUROPÄISCHE PATENTSCHRIFT

(11) **EP 0 632 760 B1**
(45) Veröffentlichungstag und Bekanntmachung des Hinweises auf die Patenterteilung: **05.03.1997**
(21) Anmeldenummer: 93906559.5
(22) Anmeldetag: 19.03.1993
(51) Int. Cl.: B29C 39/42, B29C 35/02, B29C 70/00

(54) **VERFAHREN ZUM VERGIESSEN VON BAUTEILEN MIT EINER IMPRÄGNIERENDEN MASSE**
PROCESS FOR SEALING COMPOUNDS IN AN IMPREGNATING COMPOUND
PROCEDE DE SCELLAGE DE COMPOSANTS DANS UNE MASSE D'IMPREGNATION

(30) Priorität: 28.03.1992 DE 4210241
(43) Veröffentlichungstag der Anmeldung: 11.01.1995
(73) Patentinhaber: VERFAHRENSTECHNIK HÜBERS GMBH, D-46395 Bocholt (DE); CIBA-GEIGY AG, 4002 Basel (CH)
(72) Erfinder: TERHARDT, Josef, D-4292 Rhede-Vardingholt (DE); RÜGER, Peter, D-4290 Bocholt (DE); BAUMANN, Dieter, CH-4313 Möhlin (CH)
(74) Vertreter: Stratmann, Ernst, Dr.-Ing.
(86) Internationale Anmeldenummer: EP9300663
(87) Internationale Veröffentlichungsnummer: WO9319919

(56) Entgegenhaltungen:
- WO-A-88/00135
- DE-A- 3 019 509
- US-A- 5 044 944
- DATABASE WPIL Week 8830, Derwent Publications Ltd., London, GB; AN 88-212335 & US,A,4 756 091 (VAN DENEND) 12 July 1988 siehe Zusammenfassung

## Beschreibung

### TECHNISCHES GEBIET

Die Erfindung betrifft ein Verfahren zum Vergießen und anschließendem Aushärten eines Bauteils oder mehrerer Bauteile, wie Zeilentransformatoren, mit einer imprägnierenden Masse, und zum Aushärten der Masse in einem Ofen, mit den Verfahrensschritten gemäß dem Oberbegriff des Anspruchs 1, umfassend
a) Einbringen eines Bauteils oder einer Palette von mehreren Bauteilen in eine unter Vakuum setzbare Gießkammer (48),
b) Evakuieren der Gießkammer (50),
c) Vergießen des oder der mehreren Bauteile - ggf. aufeinanderfolgend - mit der Masse unter Unterdruck oder Vakuum,
d) Belüften der Gießkammer (56),
e) Ausfahren des Bauteils oder der Palette (46) mit den mehreren Bauteilen und Aushärten derselben in einem Ofen.

Außerdem betrifft die Erfindung auch eine Vorrichtung zum Vergießen eines Bauteils oder von mehreren Bauteilen, wie Zeilentransformatoren mit einer imprägnierenden Masse, und zum Aushärten der Masse in einem Ofen, bestehend aus einem Vorratsbehälter für Vergußmasse, einer dem Vorratsbehälter nachgeschalteten Dosiereinrichtung, die innerhalb einer, vorzugsweise evakuierbaren, Gießkammer oberhalb des zu vergießenden Bauteils (oder der zu vergießenden Bauteile) mündet, einer durch die Gießkammer führenden Transporteinrichtung für das Bauteil oder für die (beipsielsweise auf einer Palette angeordneten) Bauteile, wobei die Gießkammer eine Einzelkammer darstellt oder drei durch Trennwände voneinander getrennte Kammern bildet (Vorkammer zum Einschleusen, Hauptkammer, Nachkammer zum Ausschleusen).

### STAND DER TECHNIK

Aus einer im Dezember 1990 gedruckten Druckschrift der Firma Verfahrenstechnik Hübers GmbH, 46365 Bocholt, bezeichnet mit "Vakuumgießharzanlagen", wird auf Seite 9 ein Drei-Kammer-Gießautomat beschrieben, bei dem neben der Hauptkammer, in der die Gießmasse unter Vakuum und Wärmebehandlung zum Aushärten gebracht wird, noch eine zusätzliche Kammer zum Vorbehandeln und Einschleusen der auf einer Palette befindlichen Gießformen vorhanden ist, sowie eine weitere Kammer zum Ausschleusen und Nachbehandeln der vergossenen Teile.

Die einzelnen Kammern sind durch vakuumdichte Hubtüren miteinander verbunden, so daß die in der Mitte liegende Gießkammer nach Beendigung des Prozesses nicht wieder belüftet und dann erneut evakuiert zu werden braucht.

Durch dieses zeitsparende Arbeitsverfahren können sehr große Stückzahlen mit Einfach- und Mehrfach-Gießdüsen vollautomatisch vergossen werden.

Damit wird deutlich, daß die Verwendung von dreikammerigen Vakuumöfen an sich zum Stand der Technik gehört, wenn auch Einzelheiten aus dieser Druckschrift nicht hervorgehen.

Aus der US-A-5044944 ist ein Dreikammerofen zur Aushärtung von einem Harz bekannt, der gemaß den Figurendarstellungen aus vier Kammern besteht und mit Infrarotstrahlungsheizeinrichtung versehen ist. Der Ofen weist zwei Vorheizzonen, eine Hauptheizzone und eine Abkühlzone auf, welche vier Zonen diesen vier Kammern entsprechen. Am Einlaß, am Auslaß sowie zwischen der Heizzone und der Abkühlzone sind jeweils Schleusen angeordnet. Die Anordnung dient dazu, den Sauerstoffgehalt der Ofenatmosphäre im Bereich der Heizzone möglichst klein zu machen. Allerdings ergibt sich dadurch, daß eine vollständige Eingangschleuse hier nicht verwirklicht ist. Dadurch wird es unmöglich, in einer der Kammern einen über dem äußeren Atmosphärendruck wesentlich hinausgehenden Überdruck ständig aufrechtzuerhalten.

Das Öffnen und Schließen der Schleusen wird über die Annäherung der jeweiligen Arbeitsstücke gesteuert, also nicht durch unabhängige Verfahrenssteuereinrichtungen.

Die während des Öffnens eindringende sauerstoffhaltige Luft wird durch Spülung mittels Stickstoff wieder beseitigt. Ein über dem äußeren Atmosphärendruck liegender Druck wird nicht angestrebt und ist auch mit der angegebenen Anordnung nicht erreichbar. Durch die Einrichtungen zum Liefern von nicht oxidierendem Gas (wie Stickstoff) entsteht nur ein relativ geringfügiger Strömungsüberdruck, der einen ganz anderen Zweck hat, nämlich die Verdrängung von Sauerstoff aus der Ofenatmosphäre, als es beim Anmeldungsgegenstand der Fall ist, wo der Überdruck zum Einpressen von Tränkmasse in die zu tränkenden Gegenstände dient.

Ergänzend sei noch auf Druckschriften verwiesen, die gleichfalls von der Anmelderin stammen und die sich mit Teilaspekten der vorliegenden Erfindung beschäftigen. So zeigt die DE 38 03 419 A1 eine Vorrichtung für die dosierte Abgabe von mehreren Teilmengen zähflüssiger Stoffe, wie Gießharz, bei der auch innerhalb einer Vakuum- oder Unterdruckkammer oberhalb von Aufnahmebehältern für die Teilmengen zähflüssiger Stoffe Gießvorrichtungen angeordnet sind. Über die Weiterbehandlung nach dem Vergießen wird in dieser Druckschrift aber nichts ausgesagt. In der Druckschrift werden weitere Druckschriften als Stand der Technik genannt, die aber ebenfalls über den weiteren Verfahrensablauf nach Dosierung bzw. Imprägnierung von Bauteilen nichts aussagen.

Eine zum Vergießen benutzte Vakuumkammer zeigt besonders deutlich die DE 30 19 509 A1, in der ein Vorläufertyp der in dem vorerwähnten Prospektblatt dargestellten Gießanlage erläutert wird. Hinsichtlich von Einzelheiten des Vergießvorganges selber sei daher auf diese Druckschriften verwiesen, so daß auf eine nähere Erläuterung in der nachfolgenden Beschreibung verzichtet werden kann.

Allen genannten Druckschriften ist gemeinsam, daß mit ZweiKomponenten-Material gearbeitet wird, das dadurch aushärtet, daß die beiden Komponenten miteinander in Kontakt gebracht werden. Neuerdings ist man jedoch bestrebt, Vergußmassen zu entwickeln, die bereits fertig gemischt sind, so daß das bisher notwendige Portionieren der einzelnen Komponenten oder Bestandteile der späteren Mischung wegfallen kann, was zu erheblichen Vereinfachungen führt.

Die Verwendung von Ein-Komponenten-Material hat aber nicht nur die genannten Vereinfachungsmöglichkeiten zur Folge, weil die Anordnung von mehreren Vorratsbehältern, die Erstellung von Einrichtungen zur exakten Dosierung und Mischung der Materialien wegfallen, ein weiterer Vorteil ist der, daß ein derartiges Ein-Komponenten-Material weniger toxisch ist, im Gegensatz zu bisher verwendeten Mehr-Komponenten-Materialien, wo mindestens eine der Komponenten von ihrer Verarbeitung verhältnismäßig stark toxisch ist.

Ein-Komponenten-Materialien weisen diese Nachteile nicht auf, sie können möglicherweise auch so ausgebildet werden, daß sie unter Wärme innerhalb relativ kurzer Zeit (z. B. innerhalb einer Viertelstunde) aushärten, während bisher ein Aushärtezyklus von bis zu 6 Stunden üblich war.

Ein weiterer Vorteil, der erreicht werden soll, ist eine Verkleinerung der Anlage, schon deshalb, weil nur noch ein Vorratsbehälter nötig ist, anstelle deren mehrerer. Auch der Energieverbrauch kann abgesenkt werden, weil nicht mehr mehrere Vorratsbehälter auf einer bestimmten Temperatur gehalten werden müssen, sondern nur noch ein Vorratsbehälter, wobei dessen Temperatur auf Zimmertemperatur gehalten werden kann, so daß möglicherweise eine genaue Temperierung auch hier entfallen kann.

Allerdings erfordert ein derartiges neues Material auch neue Anlagen, mit denen das Material verarbeitet werden kann.

Die im folgenden beschriebene Verfahrensweise und die zur Ausführung des Verfahrens vorgesehene Einrichtung ermöglichen die Verarbeitung eines derartigen, meist hoch viskosen Materials, das bei Temperaturen bis zu 30°C noch nicht reaktionsfähig ist, aber bei höherer Temperatur, beispielsweise bei 80°C, auszuhärten beginnt und dann innerhalb kurzer Zeit den Aushärtevorgang auch abschließt.

Wegen der bei einem derartigen Material angestrebten sehr kurzen Aushärtezeit von beispielsweise nur 15 Minuten lassen sich bestimmte Gegenstände, wie Zeilentransformatoren aus der Fernsehindustrie, die sehr gut imprägniert werden müssen, nach bisherigen Verfahrensweisen (Vakuumherstellung, Verguß, Lüftung, Aushärtung in einem Trockenofen, beispielsweise Paternosterofen) nicht mehr behandeln, da mit dem neuen Material die für diese Verfahrensvorgänge notwendige Gesamtzeitdauer nicht mehr zur Verfügung steht. Außerdem sind die bisher verwendeten Paternosteröfen nicht nur groß, sondern sie verbrauchen auch viel Energie.

Mit dem neuen Verfahren soll erreicht werden, daß der bisher notwendige Zeitbedarf drastisch reduziert wird und so eine Anpassung an die angestrebte Eigenschaft des neuen Materials erreicht wird.

Aufgabe der vorliegenden Erfindung ist es, den eingangs genannten Stand der Technik weiterzubilden und insbesondere für abgewandelte Verfahrensweisen zu nutzen.

Gelöst wird die Aufgabe durch eine Verfahrensweise, die gemäß dem Kennzeichenteil von Anspruch 1 die Merkmale umfaßt, daß die Masse eine Einkomponentenmasse darstellt, die bei Zimmertemperatur nicht, bei erhöhter Temperatur (z. B. 60° bis 80°C) jedoch innerhalb kurzer Zeit (z. B. innerhalb weniger als 30 Minuten) aushärtet, und daß das Aushärten in einem drei Kammern umfassenden Ofen gemäß folgenden weiteren Verfahrensschritten erfolgt:
f) Einbringen des Bauteils oder der Palette (46) mit den mehreren Bauteilen in eine Ofenschleusenvorkammer (68) des Aushärteofens (60);
g) Schließen der Ofenschleusenvorkammer und Unterdrucksetzen derselben (88);
h) Öffnen der Ofenschleusenvorkammer (68) zu einer Ofenhauptkammer (70) und Einfahren des Bauteils oder der Palette (46) von Bauteilen in die Ofenhauptkammer (70), und Schließen der Ofenhauptkammer;
i) Durchfahren des Bauteils oder der Palette (46) von Bauteilen durch die Ofenhauptkammer, ggf. zusammen mit anderen Bauteilen oder anderen Paletten mit Bauteilen, im Takt mit dem Einbringen von weiteren Bauteilen oder Paletten von Bauteilen in die Ofenschleusenvorkammer bzw. in die Ofenhauptkammer;
k) Öffnen der Ofenhauptkammer zu einer Ofenschleusennachkammer und Ausfahren des Bauteils oder der Palette (46) von Bauteilen der Ofenhauptkammer in die Ofenschleusennachkammer und Schließen der Ofenschleusennachkammer.
l) Entlüften der Ofenschleusennachkammer und Ausfahren des Bauteils oder der Palette von Bauteilen aus der Ofenschleusennachkammer.

Durch diese Verfahrensweise wird erreicht, daß auch mit der oben erläuterten Ein-Komponenten-Masse ein ausreichend gutes Imprägnieren selbst von kritischen Bauteilen, wie Zeilentrafos der Fernsehindustrie, ermöglicht wird, und zwar innerhalb einer ausreichend kurzen Zeit, so daß auch schnell aushärtendes Ein-Komponenten-Vergußmaterial in alle Poren und Windungslücken des Bauteils einzudringen in der Lage ist und so später keine beispielsweise zu Überschlägen neigende offene Bereiche übrig bleiben.

Durch die Verwendung von Vorkammer, Hauptkammer und Nachkammer innerhalb der Ofenanlage läßt sich die Wartezeit für einzelne Bauteile oder Paletten von Bauteilen nach dem Vergießen bis zum Eintreten in den Ofen und damit dem Unterdrucksetzen drastisch verkürzen, beispielsweise auf zwei oder drei Minuten, so daß nicht mehr wie bei früheren Verfahrensweisen die Gefahr besteht, daß während dieses Wartens das Material bereits teilweise aushärtet. Die Gefahr, daß nicht mehr alle Poren und Windungen mit Material während des nachfolgenden Unterdrucksetzens im Ofen gefüllt werden, wird verkleinert. Der Zeitraum, der zwischen dem Vergießen und dem anschließenden Unterdrucksetzen und ggf. dem Bringen unter erhöhte Temperatur ist nämlich so kurz, daß er nur noch einen Bruchteil von 10 oder 20 % der Gesamtzeit ausmacht, die für den Aushärtevorgang insgesamt zur Verfügung steht. Das ist ausreichend, um sicherzustellen, daß auch kritische Bauteile ausreichend gut imprägniert werden.

Ein weiterer Vorteil der Behandlung mit Vorkammer, Hauptkammer und Nachkammer ist der, daß erheblich weniger Energie gebraucht wird und auch die Gefahr des Freisetzens von umweltschädlichen Gasen reduziert wird.

Das erfindungsgemäße Verfahren läßt sich auch noch günstig weiterbilden, beispielsweise dadurch, daß das Vergießen (Verfahrensschritt c) bereits mittels eines temperierbaren Staudruckmischers erfolgt, der die Masse beim Mischen auf schon annähernd die Reaktionstemperatur erhitzt, so daß mit dieser bereits erhitzten Masse jeweils ein Bauteil oder die Bauteile der Palette vergossen werden. Durch dieses Erhitzen beginnt das Reaktionsgeschehen bereits während des Mischens, so daß das Aushärten nicht nur, wie bei bisherigen Verfahrensweisen, an der Oberfläche beginnt, sondern innerhalb des gesamten Vergußmaterials, was ein gleichmäßigeres und zeitlich synchrones Aushärten ermöglicht, was die Qualität der fertigen Bauteile verbessert und die Gefahr von Schrumpft lunkern, also Schrumpföffnungen in der Masse, verringert. Infolge der weiteren erfindungsgemäßen Verfahrensweise, die, wie bereits geschildert, zu einer zeitlich sehr kurzen taktweisen Ofenaushärtung führt, ist diese bereits im Mischer eingeleitete Aushärtephase ohne sonstige Nachteile.

Günstig ist es, wenn im Verfahrensschritt h das Durchfahren der Hauptkammer des Ofens zeitlich in Synchronisation mit dem Durchfahren der Schleusenvorkammer und der Schleusennachkammer erfolgt. Insbesondere kann in geeignetem Zeittakt die in den Kammern befindliche temperierte Druckluft umgepumpt werden.

Der Wirkungsgrad der Anlage läßt sich erhöhen, wenn die Entlüftungsluft aus den Schleusenkammern (Vor- und Nachkammer) rezirkuliert wird.

Bei der Vorrichtung zum Vergießen eines Bauteils oder von jeweils mehreren Bauteilen, wie Zeilentransformatoren, mit einer imprägnierenden Masse und zum Aushärten der Masse in einem Ofen mit den Merkmalen des Oberbegriffs des Anspruches 6 besteht die Erfindung darin, daß als Vergußmasse ein Einkomponentenmaterial, das bei Zimmertemperatur nicht, bei erhöhter Temperatur (z. B. 60° bis 80°C) jedoch innerhalb kurzer Zeit (z. B. innerhalb weniger als 30 Minuten) aushärtet, verwendet wird, daß der Dosiereinrichtung 30 eine Aufheizeinrichtung für die Vergußmasse, wie ein beheizbarer Mischer 138 nachgeordnet ist, die über ein Gießventil 42 in der Gießkammer 48 mündet, und daß der Gießkammer 48 ein Durchlaufofen 60 zum Aushärten der Masse in den Bauteilen unter Überdruck und erhöhter Temperatur nachgeschaltet ist, in welchen Durchlaufofen 60 die Transporteinrichtung 54 hinein-, hindurch- (154, 254, 354) und hinaus- (54) führt.

Zur Erlangung der kurzen Bearbeitungszeit ist es vorteilhaft, wenn der Ofen, wie bereits geschildert, aus drei Kammern Desteht, nämlich einer Vorkammer, einer Hauptkammer und einer Nachkammer.

Die zeitsparende, zu einer gleichmäßigeren ausgehärteten Masse führende Aufheizbarkeit der Masse schon während des Mischens läßt sich insbesondere durch das Merkmal erreichen, daß der Dosiereinrichtung ein beheizbarer Statikmischer nachgeschaltet ist, der über ein Gießventil in der Gießkammer mündet.

Der Durchlaufofen kann vorteilhaft aus drei Kammern (Einschleusekammer, Hauptkammer, Ausschleusekamer) bestehen.

Die zwei Schleusenkammern des Aushärteofens können über eine Druckleitungseinrichtung miteinander verbunden sein, die ein (passives) Entlüften der einen Schleusenkammer (beispielsweise der Nachkammer) in die andere Schleulsenkammer (beispielsweise Vorkammer) ermöglicht.

Dieses Entlüften kann durch Pumpeneinrichtungen aktiv unterstützt und so weit fortgesetzt werden, bis die eine Schleusenkammer Umgebungsdruck und die andere Schleusenkammer den Druck innerhalb der Hauptkammer aufweist.

Die Kammern können mit Heizeinrichtungen verknüpft sein, die die Kammerwände auf einer einstellbaren Temperatur halten. Diese können aus einem die Kammerwände umschließenden Hohlraum bestehen, an dessen einem Ende Heizmedium zugeführt und an dessen anderem Ende Heizmedium abgeführt wird. Dies führt zu einer besonders energiesparenden Arbeitsweise.

Als Heizeinrichtung können vorzugsweise neben oder statt Konvektionsheizanlagen auch Infrarotstrahler vorgesehen werden, die zeitlich steuerbar zumindest eine Fläche der auszuhärtenden Masse beaufschlagen. Dies gilt insbesondere dann, wenn die zu vergießenden Bauteile größere Abmessungen haben, wie beispielsweise Zeilentransformatoren für Fernsehgeräte.

Zusätzliche Infrarotheizung ist auch nützlich, wenn Schwankungen in der Temperatur der Bauteile auftreten. Z. B. hat das erste Bauteil von mehreren, nacheinander einlaufenden Bauteilen nicht die gleiche Temperatur wie das letzte Bauteil. Derartige Temperaturschwankungen können durch die Infrarotheizung kompensiert werden, was besonders leicht ist, wenn ein Pyrometer vorgesehen wird, das die Temperatur dieser Fläche der auszuhärtenden Masse abtastet, wodurch die Infrarotstrahler besonders genau gesteuert werden können, auch in Anpassung an schwankende Bauteiltemperaturen.

Zu diesem Zweck könnten Infrarotstrahler und Pyrometer über eine Steuereinrichtung, wie insbesondere einen Mikroprozessor zu einem Steuerkreis zusammengeschaltet sein, derart, daß die Fläche (bzw. Oberflächenschicht) innerhalb einer vorgegebenen Zeit auf eine vorgegebene Temperatur erhitzt und auf dieser Temperatur für einen weiteren vorgegebenen Zeitraum gehalten wird. (Die Eindringtiefe beträgt meist nur einige Zehntel-Millimeter!).

Der Infrarotstrahler kann vorzugsweise aus mehreren, nebeneinander jeweils koaxial zur Ofenachse angeordneten Quarzröhren bestehen, wobei die von den Quarzröhrenachsen aufgespannte Fläche im wesentlichen parallel zu dem Abstand von der Massenoberfläche - die vorzugsweise parallel zur Erdoberfläche ist - liegt. Der Meßwinkel des Pyrometers ist vorzugsweise im spitzen Winkel auf die Massenoberfläche gerichtet, um so Störeinflüsse durch die Heizstrahlung der Infrarotröhren zu verringern.

### KURZE BESCHREIBUNG DER ERFINDUNG

Die Erfindung wird nachfolgend anhand von Ausführungsbeispielen näher erläutert, die in den Zeichnungen dargestellt sind.

Es zeigt:
- Fig. 1: schematisiert einen Vorratsbehälter für Vergußmasse mit nachgeschalteter Misch- und Dosiereinrichtung sowie, angeschnitten, den Eingangsbereich des Durchlaufofens;
- Fig. 2: ebenfalls in schematisierter Form einen erfindungsgemäß ausgestalteten Durchlaufofen;
- Fig. 3: in einer Seitenansicht eine praktische Ausführungsform des in Fig. 2 im wesentlichen nur schematisch dargestellten Ofens, und zwar die Vorkammer sowie einen Teil der Hauptkammer mit angedeuteter Infrarotheizeinrichtung und Pyrometeranordnung;
- Fig. 4: eine Ansicht von links auf den Ofen gemäß Fig. 3 zur näheren Erläuterung der Infrarotheizeinrichtung und der Pyrometeranordnung;
- Fig. 5: eine schematisierte Darstellung des Ofensquerschnitts zur Erläuterung der Aufheizung mittels Infrarotstrahlern;
- Fig. 6: in einer ähnlichen Ansicht wie Fig. 5 die Wirkungsweise der Pyrometermessung; und
- Fig. 7: eine Ansicht von oben auf die Heizeinrichtung zur Erläuterung der Anordnung von jeweils zwei zueinander versetzten Infrarotstrahlerröhren.

### BESTE WEGE DER AUSFÜHRUNG DER ERFINDUNG

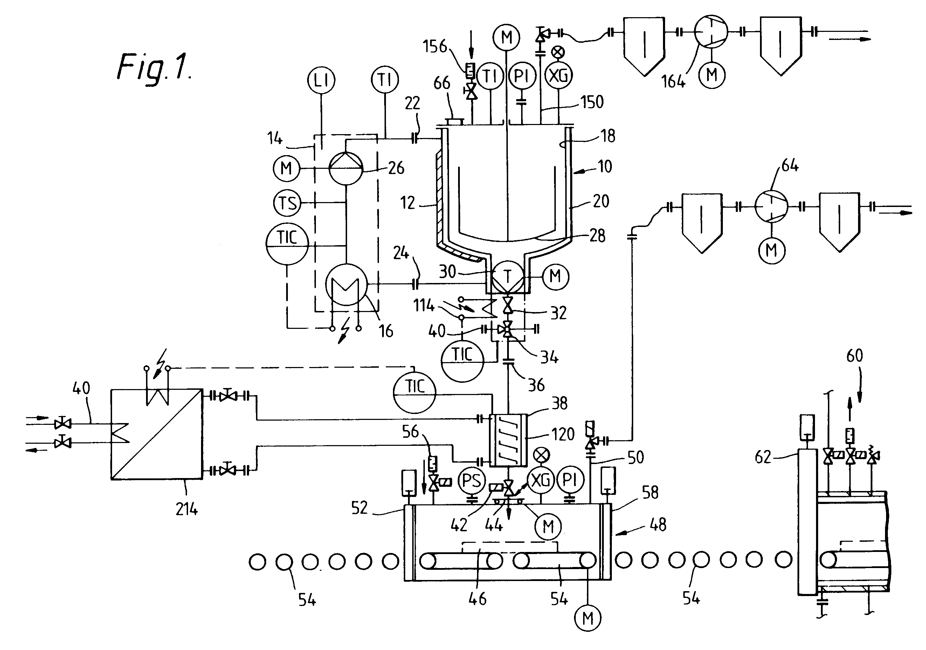

In Fig. 1 ist ein Vorratsbehälter 10 für Vergußmasse zu erkennen, mit einer thermischen Isolation 12, die zwischen sich und der Vorratsbehälterinnenwand 18 einen Zwischenraum 20 bildet, der an seinem oberen Ende einen Zuflußflansch 22 und an seinem unteren Ende einen Abflußflansch 24 aufweist, um Temperierflüssigkeit durch diesen Zwischenraum 20 hindurchleiten zu können. Mittels den Flanschen 22, 24 ist eine Temperierflüssigkeitumlaufeinrichtung 14 angeschlossen, die eine Heizeinrichtung 16 für die Flüssigkeit aufweist, desweiteren eine durch einen Motor M angetriebene Umlaufpumpe 26. Mit der Einrichtung 14 kann die Temperierflüssigkeit auf eine bestimmte Temperatur gebracht und gehalten werden.

Der Vorratsbehälter 10 umfaßt auch ein von einem Motor M angetriebenes Rührwerk 28, sowie an seinem unteren Auslaufende eine motorbetriebene Dosierpumpe 30 mit nachgeschaltetem Rückschlagventil 32 und extern steuerbarem Drei-Wege-Ventil 34, das es ermöglicht, von der Dosierpumpe 30 gefördertes, aus dem Vorratsbehälter stammendes Material entweder über eine Flanschverbindung 36 an eine Mischeinrichtung 38 oder über einen anderen Flansch 40 in eine Auffangeinrichtung (hier nicht dargestellt) zu leiten.

Die Ventileinrichtungen 32, 34 können ebenfalls mit einer Temperiereinrichtung 114 verbunden sein, beispielsweise, wie auch bezüglich der Temperiereinrichtung 14, eine elektrisch betriebene Heizeinrichtung, und einem Regelkreis, der aus einem Temperaturfühler und einer Steuereinrichtung für die Heizeinrichtung bestehen mag (mit "TIC" angedeutet).

Auch der Mischer 38 kann einen Mantel mit Zwischenraum 120 aufweisen, der über Flanscheinrichtungen mit einer Temperiereinrichtung 214 verbunden sein kann, wobei auch hier wieder ein Regelkreis angedeutet ist, verbunden mit einer elektrischen Heizeinrichtung, es kann aber auch eine Kühlung erfolgen, wie durch die Zufuhranordnung 40 für beispielsweise Kühlwasser angedeutet ist.

Durch den Mischer 38, der während des Mischvorganges auch statischen Druck erzeugt, wird das Material weiter zu einem Gießventil 42 gefördert, das mittels einer verfahrbaren Einrichtung 44, wiederum angetrieben durch einen Motor M, entlang einer Palette 46 verfahren werden kann, um auf dieser Palette angeordnete, hier nicht näher dargestellte verschiedene Bauteile mit einer dosierten Menge von Vergußmasse zu versehen. Die Palette 46 befindet sich in der Darstellung gemäß Fig. 1 innerhalb einer Gießkammer 48, die über eine Vakuumleitung 50 evakuiert werden kann.

Die Gießkammer 48 besitzt eine beispielsweise pneumatisch anhebbare Zugangstür 52, um die Palette 46 über geeignete Transporteinrichtungen, wie Transportwalzen oder Transportbänder 54 in die Gießkammer 48 hineinzufahren, woraufhin die Zugangstür 52 wieder pneumatisch geschlossen und anschließend die Gießkammer über die Leitung 50 evakuiert werden kann. Nach dem Einbringen von entsprechenden dosierten Mengen von Vergußmasse in die einzelnen Bauteile, die sich auf der Palette 46 befinden, wird die Gießkammer wieder belüftet, beispielsweise über das betätigbare Belüftungsventil 56, woraufhin die bisher geschlossene Abgangstür 58, beispielsweise ebenfalls pneumatisch, geöffnet werden kann. Mit weiteren Transporteinrichtungen ähnlich denen gemäß der Bezugszahl 54 kann dann die Palette aus der Gießkammer 48 herausgefahren und in Richtung auf einen Durchlaufofen 60 gefahren werden, von dem die Zugangstür 62 noch zu erkennen ist, wiederum pneumatisch betätigbar.

Ähnlich wie die Gießkammer 48 über eine Leitung 50 evakuierbar ist, beispielsweise durch eine motorbetriebene Vakuumpumpe 64 mit vorgeschalteten und ggf. nachgeschalteten Abscheideeinrichtungen für Schadstoffe, kann auch der Vorratsbehälter 10 mittels einer Vakuumleitung 150 evakuierbar sein, die wiederum an eine Vakuumpumpe 164, ähnlich der mit der Bezugszahl 64, angeschlossen sein kann.

Zum Füllen des Behälters 10 kann der Deckel abgehoben (vorher findet eine Vakuumbeseitigung durch Entlüftungsventil 156 statt) und der Behälter wieder nachgefüllt werden. Dies kann aber auch über einen Zugangsanschluß 66 erfolgen.

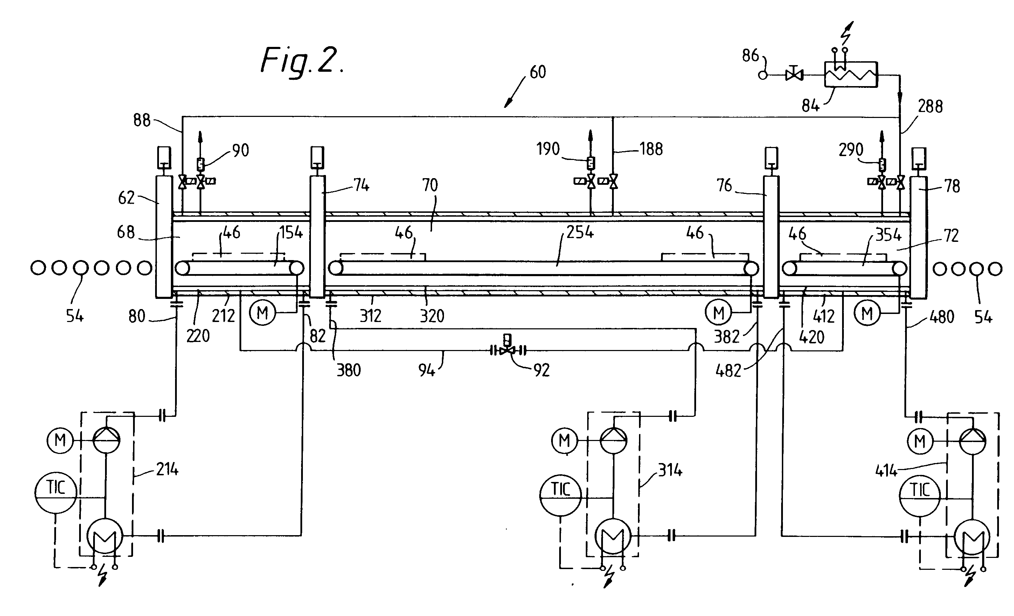

Wie aus Fig. 2 zu erkennen ist, führt die Transporteinrichtung 54 die mit Vergußmasse versehenen Bauteile (entweder einzeln oder auf einer Palette gehalten) über die schon erwähnte Zugangstür 62 in einen Durchlaufofen 60 hinein und auch durch diesen gesamten Ofen hindurch. Wie die Fig. 2 deutlich erkennen läßt, besteht der Durchlaufofen 60 aus drei voneinander getrennten Behandlungsräumen 68, 70 und 72, die durch beispielsweise wieder pneumatisch betätigbare Türen und/oder schließbare Zwischenwände 74, 76 voneinander getrennt sind. Der Behandlungsraum 72 öffnet sich über eine Abgangstür 78, von wo aus den Ofen 60 verlassende Bauteile oder Paletten über entsprechende Transporteinrichtung 54 weggefahren werden können.

Jede der Kammern 68, 70 und 72 weist wiederum die Kammer jeweils umschließende Zwischenräume 220, 320 bzw. 420 auf, die ihrerseits von einer Isolierschicht 212, 312 bzw. 412 gegenüber der äußeren Umgebung abgeschlossen sind. Die Zwischenräume 220 sind in ähnlicher Weise, wie bereits bezüglich des Vorratsbehälters 10 beschrieben, mit einer Einrichtung 214, 314 oder 414 verbunden, und zwar über angeflanschte Verbindungsleitungen, mit der der Zwischenraum 220 mit Temperiermedium, beispielsweise Temperierflüssigkeit, beaufschlagt weden kann, vorzugsweise derart, daß in der Nähe des Eintrittsbereichs für Paletten oder zu behandelnde Bauteile das Temperiermedium zugeführt wird, siehe Bezugszahl 80, und in der Nähe des Austrittsbereiches, Bezugszahl 82, wieder weggeführt wird, um erneut in der Einrichtung 214 auf die richtige Temperatur gebracht zu werden.

Der Raum 68 des Ofens 60 ist eine sogenannte Einschleusekammer, in der das zu behandelnde Bauteil (oder eine Palette derartiger Bauteile) von im wesentlichen Außentemperatur und Außendruck nach dem Einfahren und Schließen der Tür 62 (Tor 74 ist ebenfalls geschlossen) unter einen erhöhten Druck gesetzt wird, beispielsweise unter einen Überdruck von 6 bar, gleichzeitig wird auch die Temperatur auf eine geeignete Höhe gebracht, beispielsweise auf 80° C. Durch den Anschluß der Temperiereinrichtung im Bereich des Eintritts der Palette, Bezugszahl 80, werden gewisse durch die nach außen sich öffnende Tür 62 entstehende Temperaturgradienten wieder ausgeglichen.

Entsprechendes gilt auch für die nächste Kammer 70, die als Druckkammer bezeichnet sei und die eine größere Erstreckung aufweist, wie die Einschleusekammer 68, in der lediglich eine Palette untergebracht werden muß, während die Hauptkammer 70 mehrere Paletten aufnehmen kann, beispielsweise derer sechs. Diese Hauptkammer 70 unterliegt während der gesamten Behandlungszeit einen konstanten Überdruck von beispielsweise 6 bar, wie auch einer im wesentlichen konstanten Temperatur, bestimmt durch die Temperiereinrichtung 314. Auch hier ist es günstig, das Temperiermedium, z. B. die Temperierflüssigkeit am Eingang dieses Ofens, also im Bereich der mit Tür versehenen Trennwand 74 zuzuführen, siehe Bezugszahl 180, und in der Nähe der ebenfalls eine Tür aufweisenden weiteren Trennwand 76, bei der die Paletten nach Behandlung wieder austreten, den Abzug der Temperaturflüssigkeit, 382, vorzunehmen. Die höhere Temperatur befindet sich somit im Bereich des Eintritts der Paletten oder Bauteile, so daß hier eine möglichst schnelle Anpassung an die Ofentemperatur durch den sich ergebenden Temperaturgradienten erreicht wird.

Umgekehrt ist es bei der letzten Kammer 72, der Ausschleusekammer, günstig, die Temperierflüssigkeit über den Zufluß 480 nahe der Ausgangstür 78 vorzunehmen, das Ableiten des Temperiermediums jedoch in der Nähe der Trennwand 76, siehe Bezugszahl 482 vorzunehmen. Dies ermöglicht wiederum einen Ausgleich der stärkeren Abkühlung aufgrund der nahen Verbindung zur Außenwelt im Bereich der Tür 78, indem die Temperatur des zufließenden Temperiermedium bei 480 höher ist als 482.

Um die Ofenbereiche 68, 70, 72 unter Überdruck setzen zu können, dienen beispielsweise Preßluftanschlüsse 88, 188 und 288, mit denen z. B. mittels einer Temperiereinrichtung 84 auf Temperatur gebrachte und über einen Anschluß 86 zugeführte Preßluft den einzelnen Kammer zugeführt werden kann. Entlüften lassen sich die Kammern über entsprechende Entlüftungsventile 90, 290. Wie die Fig. 2 desweiteren erkennen läßt, lassen sich die zu behandelnden Bauteile oder die Paletten mit Hilfe von Halte- und Transporteinrichtungen 154, 254 und 354 in die verschiedenen Kammern 68, 70 und 72 des Ofens hineinfahren, dort über eine steuerbare Zeit festhalten und von dort in die nächste Ofenkammer oder wieder aus dem Ofen herausfahren. Die Transporteinrichtungen 154, 254 und 354 sind durch entsprechende Antriebe M antreibbar.

Zur Einsparung von Energie (Drucklufterzeugung, Druckluftanwärmung) ist eine Verbindungsleitung 94 zwischen den Kammern 68 und 72 vorgesehen, mit einer steuerbaren Ventileinrichtung 92. Auf diese Weise ist es möglich, in der Ausschleusekammer 72 befindliche, unter Überdruck und auf erhöhter Temperatur befindliche Luft oder Gasmenge vor dem Öffnen der Ausschleusetür 78 in die Einschleusekammer 68 einzuleiten, nachdem dort eine neue Palette eingebracht wurde und die die Kammer verschließenden Türen 62 und 74 geschlossen worden sind (vorher in dieser Kammer enthaltende Luft mußte abgeführt oder entlüftet werden, um das Zuführen der Palette oder das der Bauteile zu ermöglichen). Man kann somit die Wärmeenergie und die Druckenergie der Ausschleusekammer 72, die hier anschließend zum Ausfahren der Palette oder der Bauteile ohnehin entlüftet werden muß, verwerten, um die Einschleusekammer 68 mit unter Druck stehender, angewärmter Luft oder Gas zu beaufschlagen, die ohnehin angefallen ist.

Diese passive Druckentlastung von der Ausschleusekammer 72 in die Einschleusekammer 68 (oder umgekehrt) ist natürlich nur soweit zu bewerkstelligen, daß in beiden Kammer gleicher Druck herrscht, beispielsweise noch der halbe Druck, der vorher in der Ausschleusekammer 72 vorhanden war (beispielsweise 3 bar). Der Rest des Überdruckes und der damit vorhandenen Druckenergie sowie die mit dem Druckgas verbundene Wärmeenergie wird dann über das Ventil 290 entlüftet und geht soweit verloren. Die restliche Druckbeaufschlagung der Vorkammer 68 muß dann über Druckleitung 88 erfolgen.

Man kann jedoch diese Verluste reduzieren, wenn man zusätzlichen Geräteaufwand treiben will, beispielsweise, indem man anstelle des Ventils 92 eine aktive Pumpe vorsieht, die aus der Ausschleusekammer 72 dort noch vorhandene Druckluft aktiv in die Vorschleusenkammer 68 hineinpumpt, bis die Ausschleusekammer 72 auf Atmosphäredruck entlastet ist. Damit wird nicht nur ein großer Teil der Druckenergie, sondern auch die in dem Druckgas enthaltene Wärmeenergie ausgenutzt.

Die Einrichtungen 214, 314, 414 können natürlich auch zur Druckerzeugung herangezogen werden, anstatt daß sie wie vorstehend beschrieben nur der Temperierung dienen, in welchem Falle eine Verbindung zwischen dem Raum 220, 320 und 420 zum jeweiligen Behandlungsraum 68, 70 und 72 hergestellt werden könnte.

Die Verfahrensweise wäre etwa die folgende:

Über die Transporteinrichtung 54 werden einzelne Bauteile, oder vorzugsweise eine Palette 46 mit einer größeren Anzahl von Bauteilen nach Öffnen der Tür 52 in die Gießkammer 48 eingefahren, deren Tür 58 geschlossen ist, woraufhin die Tür 52 ebenfalls geschlossen wird und die Gießkammer über Leitung 50 evakuiert wird. Anschließend kann mittels der motorbetriebenen Transporteinrichtung 54 innerhalb der Gießkammer 48 (oder durch Bewegung des Gießventils 44) die Gießventilaustrittsöffnung an die Stellen der Palette 46 oder des Bauteils gefahren werden, an der das Gießmaterial eingebracht werden soll. Dies wird fortgesetzt, bis ggf. alle auf der Palette 46 angeordneten Bauteile vergossen sind. Daraufhin wird die Gießkammer 48 über das Ventil 56 belüftet, die Tür 58 geöffnet und die Palette 46 (oder einzelne Bauteile) über die Transporteinrichtung 54 weiter befördert, bis zur Tür 62 des Ofens 60. Nach vorherigem Entlüften über das Ventil 90 kann die Tür 62 des Ofens 60 geöffnet werden, woraufhin die Palette 46 in die Schleusenvorkammer 68 eingefahren werden kann. Nach Schließen der Tür 62 (Tür 74 ist weiterhin geschlossen) wird die Kammer 68 unter einen bestimmten Überdruck gesetzt, wobei gleichzeitig sich das Bauteil oder die Bauteile erwärmen, da der Raum 68 sowohl durch die zugeführte Druckluft oder Druckgas wie auch ggf. mittels des von Temperiermedium durchspülten Zwischenraums 120 angewärmt wird. Sobald der in der Hauptkammer 70 befindliche Druck auch in der Vorkammer 68 erreicht ist, ggf. auch nach erreichen einer bestimmten Temperatur, kann die in der Zwischenwand 74 befindliche Tür geöffnet werden, woraufhin dann die Palette 46 aus der Kammer 68 in die Kammer 70 mit Hilfe der Transporteinrichtung 154 bzw. 254 weitertransportiert werden kann. Gleichzeitig wird man zu diesem Zeitpunkt die Tür in der Wand 76 geöffnet halten, um eine andere Palette 46, die sich gerade am Ausgang der Transporteinrichtung 254 befindet, von dort in die Ausschleusekammer 72, deren Tür 78 zur Zeit geschlossen ist, auszufahren.

Nunmehr werden die in den Zwischenwänden 74 und 76 befindlichen Türen wieder geschlossen, und die in die Ausschleusekammer 72 gebrachten Gegenstände oder Palette können nach Entlüftung über das Entlüftungsventil 290 bzw. die Entlüftungsleitung 94 nach Öffnen der Türen 78 ausgefahren werden, wozu die Transporteinrichtung 354 bzw. die außerhalb des Ofens befindliche Transporteinrichtung 54 verwendbar ist. Da das Tor in der Zwischenwand ebenfalls jetzt geschlossen ist, kann auch hier eine Druckentlastung über das Druckentlastungsventil 90 stattfinden, oder aber alternativ über die Leitung 94 in die Ausschleusekammer 72 (sofern diese zwischenzeitlich ihre Tür 78 wieder geschlossen hat) entlüftet werden, woraufhin dann das Tor 72 geöffnet werden kann, um die nächste Palette, die inzwischen mit vergossenen Bauteilen am Ofen angekommen ist, in die Vorkammer 68 aufzunehmen. Nun kann das Tor 62 wieder geschlossen werden, die Vorkammer 68 auf Überdruck gebracht werden, die in der Zwischenwand 74 befindliche Tür geöffnet und die Palette in den Hauptofenraum 70 eingefahren werden.

Gleichzeitig wird zweckmäßigerweise (obwohl auch eine taktmäßige Trennung möglich ist) die Tür 76 geöffnet sein, um eine weitere (andere) Palette 46 vom Hauptraum 70 in den Ausschleuseraum 72 zu transportieren, wie bereits beschrieben.

Der Hauptofenraum 70 wird zweckmäßigerweise eine größere Erstreckung haben, so daß mehrere Paletten gleichzeitig behandelt werden können. Die Anzahl der gleichzeitig behandelbaren Paletten (oder auch Einzelbauteile) hängt von der gesamten Behandlungszeit ab, die zum Aushärten der Vergußmasse notwendig ist, und von der Taktzeit, mit der Paletten in die Vorkammer 68 und in die Nachkammer 72 ein- bzw. ausgeschleust werden sollen. Je kürzer diese Taktzeiten und je länger die Behandlungsdauer in dem Hauptofenraum 70, desto mehr Paletten sollte diese Kammer 70 aufnehmen können.

Bei einer praktischen Ausführungsform hat sich als günstig erwiesen, in dem Hauptofenraum 70 sechs Paletten unterbringen zu können.

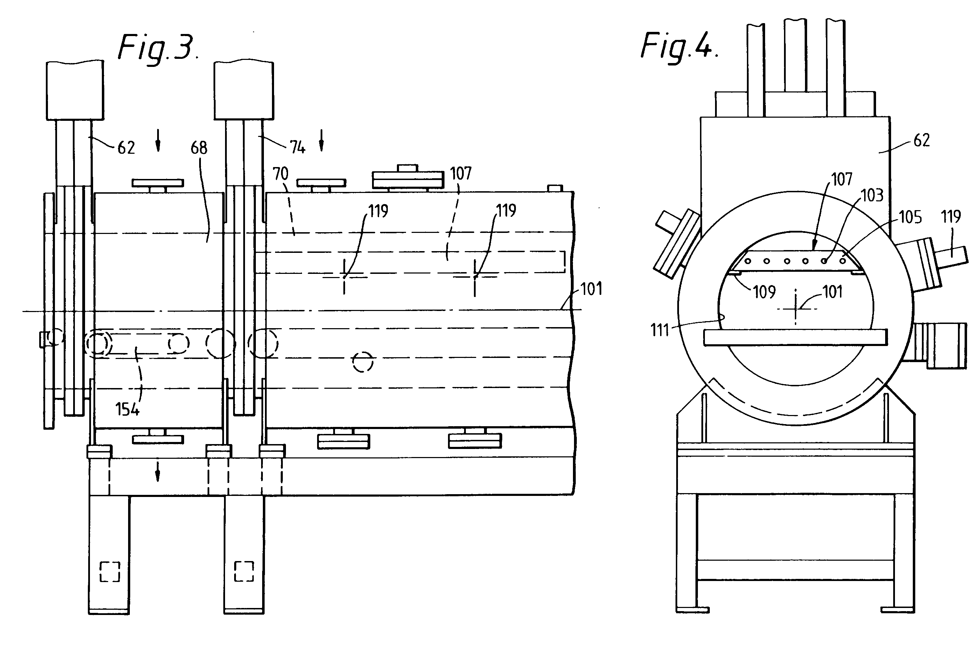

Als Heinzeinrichtungen für den Aushärteofen können in besonders vorteilhafter Weise Infrarotstrahlereinrichtungen eingesetzt werden. So zeigt Fig. 3 in einer ähnlichen Ansicht wie die linke Hälfte der Fig. 2 die erste Schleusenkammer sowie den Beginn der zweiten Schleusenkammer eines Trockenofens, der mit Infrarotheizeinrichtungen versehen ist, während Fig. 4 eine Ansicht von links auf die in Fig. 3 dargestellte Anordnung wiedergibt. Die Figuren 3 und 4 zeigen eine praktische Ausführungsform, während die Fig. 2 im wesentlichen eine schematisierte Darstellung ist.

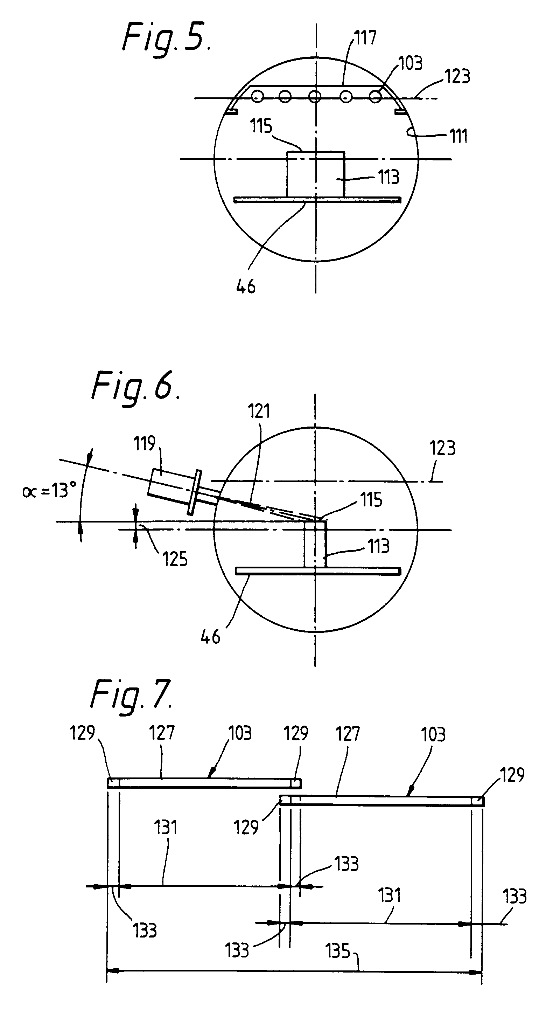

Von Bedeutung in diesen Figuren ist eine Heizeinrichtung 107 im Einlaufbereich des Behandlungsraum 70, wobei diese Heizeinrichtung 107 aus mehreren, parallel zueinander und zur Ofenachse 101 angeordneten Quarzröhren 103 besteht, die beispielsweise von Halterungseinrichtungen 105 getragen werden, die ihrerseits auf Vorsprüngen 109 abgestützt sind, die von der inneren Ofenwand 111 ausgehen. Fig. 5 zeigt in einer ähnlichen, jedoch schematisierten Ansicht wie Fig. 4 den Durchtrittsbereich mit der inneren Wand 111 des Behandlungsraums 70, in dem sich auf einer Palette 46 oder einer sonstigen Transportfläche ein Gegenstand wie z. B. ein zu vergießender Zeilentransformator befindet. Dieser Gegenstand 113 besitzt zumindest eine Fläche 115, an der die auszuhärtende Masse mit dem von den Infrarotstrahler 103 ausgehenden Infrarotlicht beaufschlagt werden kann. Diese Fläche 115 ist vorzugsweise eine freiliegende Oberfläche der auszuhärtenden Masse, also eine im wesentlichen horizontal (parallel zur Erdoberfläche) liegende Flüssigkeitsfläche, kann aber auch eine anders ausgerichtete, beispielsweise vertikale Fläche sein, wenn diese Flüssigkeit von einer für Infrarotlicht durchlässigen, festen Gegenstandswand gebildet wird. In diesem Falle könnten die Infrarotstrahler 103 auch seitlich an der Ofenwand 111 angebracht sein.

Oberhalb der Infrarotstrahler 103 ist in Fig. 5 eine Abdeckfläche 117 zu erkennen, die beispielsweise spiegelnd ausgeführt sein kann, um nach oben abgestrahltes Infrarotlicht umzulenken und ebenfalls auf die Fläche 115 zu richten.

Mit Hilfe der insoweit geschilderten Infrarotstrahlereinrichtung (anstatt oder zusätzlich beispielsweise zu einer Heißluftheizeinrichtung) läßt sich eine zur Infrarotstrahlenquelle ausgerichtete Fläche des auszuhärtenden Materials in wesentlich kürzerer Zeit auf eine gewünschte Temperatur erwärmen und ggf. auf dieser Temperatur auch halten. Um die Temperatur der mit der Infrarotstrahlung beaufschlagten Oberflächenschicht der auszuhärtenden Masse genau überwachen zu können, da eine zu große Energiezufuhr ein Überschreiten der maximal verträglichen Temperatur des Bauteils durch die heftige exotherme Reaktion der aushärtenden Masse zufolge haben kann, und damit das Bauteil beschädigt oder zerstört werden kann, ist es günstig, wenn die Quelle für die Infrarotstrahlung sehr kurze Ansprechzeit hat und auch in sehr kurzer Zeit regelbar ist. Für diese Zwecke eignen sich Quellen für langwellige Infrarotstrahlung nicht so gut, hingegen sind Quellen für kurzwellige Infrarotstrahlung gut geeignet. Die Temperatur der bestrahlten Oberfläche der Gießharzmasse, auf die aufgeheizt werden muß, bevor die Infrarotquelle wieder abgeschaltet wird, hängt von mehreren Faktoren ab, wie z. B. von der maximalen Temperaturverträglichkeit des Bauteils, von der Menge des Gießharzes, von der Dicke der Gießharzschicht, die das Bauteil umgibt, und damit wesentlich von der Geometrie des zu vergießenden Bauteils. Der Geliervorgang läuft nach Erreichen der erforderlichen Temperatur durch chemische Reaktion des Gießharzes von alleine ab.

Dies hat den Vorteil, daß die gesamte Prozesszeit verringert werden kann, gegenüber einer Erwärmung mit Heißluft, ohne daß dabei eine maximale Temperatur der Gießmasse überschritten wird. Die Betriebszeit der Infrarotstrahlung, die für das jeweilige Bauteil die gewünschte optimale Temperatur ergibt, kann durch Versuche ermittelt werden, die dann für jeweils gleichartige Bauteile konstant gehalten werden kann.

Noch günstiger ist es, die auf dieser Oberfläche durch Konvektion und/oder durch kurzwellige Infrarotstrahlung erreichte Temperatur zu messen, was am einfachsten mit Hilfe von sogenannten berührungslosen Pyrometern geschehen kann. Ein derartiger Pyrometer ist in Fig. 6 seitlich in der Ofenwand eingebaut und mit Bezugszahl 119 versehen. Das Pyrometer 119 besitzt einen Meßstrahl 121 mit einem Kegelwinkel α, der gerade ausreicht, die zu erfassende Oberfläche 115 des Gegenstandes 113 zu erfassen, wobei der Meßstrahl 121 so gerichtet ist, daß andere, sich auch erwärmende Bereiche des Gegenstandes 113 möglichst ausgeblendet bleiben. Die Anordnung des Pyrometers 119 ist vorzugsweise unterhalb der Ebene 123, an der die Infrarotstrahler 103 angeordnet sind, wobei der Meßstrahl 121 in einem schrägen Winkel α, der z. B. 13° beträgt, auf diese Oberfläche gerichtet ist, was den Vorteil hat, daß direkt von den Heizstrahlern 103 ausgehendes Licht oder von dem Gegenstand 113 reflektiertes Licht nicht zu Störeinflüssen innerhalb des Pyrometers 119 führt, so daß dieser nur durch die Wärmestrahlung der zu messenden Oberfläche selbst entstehende Meßstrahlung erfaßt. Die Oberfläche 115 ist bei der in den Fig. 5 und 6 dargestellten Ausführungsform um ein Maß 125 oberhalb der Ofenachse 101 angeordnet. Diese Entfernung beeinflußt zum einen die Entfernung zu den Heizstrahlern 103, zum anderen bestimmt diese Entfernung auch die Einstellung des Pyrometers 119.

Das Pyrometer 119 (das gemäß Fig. 3 zweifach vorgesehen ist) kann über eine hier nicht dargestellte Steuereinrichtung, beispielsweise einen Mikroprozessor, mit der Energieversorgung für die Infrarotstrahler 103 derart verbunden sein, daß die Infrarotstrahler für eine solche (beispielsweise nur wenige Sekunden dauernde) Betriebszeit eingeschaltet werden, daß die gewünschte Aufheiztemperatur in der Oberflächenschicht der auszuhärtenden Masse gerade erreicht und ggf. gehalten wird. Auf diese Weise kann die durch Wärmeleitung in das Innere des Bauteils abgeführte Energie auch rasch nachgeführt werden. Es gibt hochaktive, kationisch reagierende Harzsysteme, bei denen die Dauer der Aufheizung maßgeblich die Zykluszeit beeinflußt. Die beschleunigte Aufheizung mit Hilfe des beschriebenen Infrarotaufheizprozesses, ggf. gesteuert durch ein Pyrometer, kann daher die Arbeitsweise der Anordnung erheblich beschleunigen. Demgegenüber ist die Aufheizungsmöglichkeit über Konvektion wesentlich träger und insoweit weniger optimal.

Gemäß Fig. 3 sind zwei in Laufrichtung der auszuhärtenden Gegenstände hintereinander angeordnete Pyrometer 119 vorgesehen, ebenso wie zu jedem Pyrometer ein Satz von Quarzröhren 103 vorgesehen ist, die vorzugsweise getrennt voneinander durch die zugehörigen Pyrometer geregelt werden. Fig. 7 zeigt in Draufsicht die Anordnung von diesen beiden Sätzen von Quarzröhren 103, die zueinander so verschoben angeordnet sind, daß die aktiven, das heißt strahlenden Bereiche 127 der Röhren 103 nahtlos aneinander anschließen, während die nicht mehr strahlenden Bereiche 129 (im wesentlichen die Fassungen der Röhren) in den Bereich der strahlenden Bereiche 127 hineinreichen. Der strahlende Bereich 127 hat jeweils die Länge 131, der nicht-strahlende Bereich die Länge 133, wobei in der praktischen Ausführungsform die Länge 131 beispielsweise 420 mm betragen könnte, die Länge 133 40 bis 60 mm. Die Gesamtlänge der Anordnung, siehe Bezugszahl 135, mag annähernd 1 m betragen. Diese Erstreckung reicht aus, um übliche Bauteile sicher auf die Temperatur zu erwärmen, die zur Auslösung der exothermen Reaktion bzw. des Aushärtens der auszuhärtenden Masse führt.

### GEWERBLICHE AUSWERTBARKEIT

Das beschriebene Verfahren und das beschriebene Gerät ist gewerblich anwendbar, beispielsweise in der Elektronikindustrie.

## Patentansprüche

1. Verfahren zum Vergießen und anschließendem Aushärten eines Bauteils oder mehrerer Bauteile, wie Zeilentransformatoren, mit einer imprägnierenden Masse, und zum Aushärten der Masse in einem Ofen, mit folgenden Verfahrensschritten:
a) Einbringen eines Bauteils oder einer Palette von mehreren Bauteilen in eine unter Vakuum setzbare Gießkammer (48),
b) Evakuieren der Gießkammer (50),
c) Vergießen des oder der mehreren Bauteile - ggf. aufeinanderfolgend - mit der Masse unter Unterdruck oder Vakuum,
d) Belüften der Gießkammer (56),
e) Ausfahren des Bauteils oder der Palette (46) mit den mehreren Bauteilen und Aushärten derselben in einem Ofen,
dadurch gekennzeichnet,
daß die Masse eine Einkomponentenmasse darstellt, die bei Zimmertemperatur nicht, bei erhöhter Temperatur (z. B. 60° bis 80°C) jedoch innerhalb kurzer Zeit (z. B. innerhalb weniger als 30 Minuten) aushärtet, und daß das Aushärten in einem drei Kammern umfassenden Ofen gemäß folgenden weiteren Verfahrensschritten erfolgt:
f) Einbringen des Bauteils oder der Palette (46) mit den mehreren Bauteilen in eine Ofenschleusenvorkammer (68) des Aushärteofens (60),
g) Schließen der Ofenschleusenvorkammer und Unterdrucksetzen derselben (88),
h) Öffnen der Ofenschleusenvorkammer (68) zu einer Ofenhauptkammer (70), und Einfahren des Bauteils oder der Palette (46) von Bauteilen in die Ofenhauptkammer (70), und Schließen der Ofenhauptkammer,
i) Durchfahren des Bauteils oder der Palette (46) von Bauteilen durch die Ofenhauptkammer, ggf. zusammen mit anderen Bauteilen oder anderen Paletten mit Bauteilen, im Takt mit dem Einbringen von weiteren Bauteilen oder Paletten von Bauteilen in die Ofenschleusenvorkammer bzw. in die Ofenhauptkammer,
k) Öffnen der Ofenhauptkammer zu einer Ofenschleusennachkammer und Ausfahren des Bauteils oder der Palette (46) von Bauteilen aus der Ofenhauptkammer in die Ofenschleusennachkammer und Schließen der Ofenschleusennachkammer,
l) Entlüften der Ofenschleusennachkammer und Ausfahren des Bauteils oder der Palette von Bauteilen aus der Ofenschleusennachkammer.

2. Verfahren nach Anspruch 1, dadurch gekennzeichnet, daß vor dem Vergießen oder während des Vergießens (Schritt c), vorzugsweise mittels eines temperierbaren, staudruckerzeugenden Mischers (38), die Masse auf annähernd die Temperatur, bei der der Aushärtevorgang einsetzt, erhitzt und daß mit dieser erhitzten Masse jeweils ein Bauteil oder die Bauteile auf einer Palette beaufschlagt wird.

3. Verfahren nach Anspruch 1 oder 2, dadurch gekennzeichnet, daß das Durchfahren der Ofenhauptkammer (Verfahrensschritt h) zeitlich in Synchronisation mit dem Durchfahren der Schleusenvorkammer und der Schleusennachkammer erfolgt.

4. Verfahren nach Anspruch 3, dadurch gekennzeichnet, daß zwischen der Schleusenvorkammer und der Schleusennachkammer in einem geeigneten Zeittakt ein Umpumpen des innerhalb der Kammern befindlichen unter Druck stehenden und erwärmten Gases erfolgt.

5. Verfahren nach einem der Ansprüche 2 bis 4, dadurch gekennzeichnet, daß aus den Schleusenkammern austretende Entlüftungsluft (90, 290) zur Wiedergewinnung der Wärmeenergie und der Druckenergie rezirkuliert wird.

6. Vorrichtung zum Vergießen eines Bauteils oder von jeweils mehreren Bauteilen, wie Zeilentransformatoren, mit einer imprägnierenden Masse und zum Aushärten der Masse in einem Ofen, bestehend aus einem Vorratsbehälter (10) für Vergußmasse, einer dem Vorratsbehälter (10) nachgeschalteten Dosiereinrichtung (30), die innerhalb einer, vorzugsweise evakuierbaren Gießkammer (48) oberhalb des zu vergießenden Bauteils oder der zu vergießenden Bauteile mündet, einer durch die Gießkammer (48) führenden Transporteinrichtung (54) für das Bauteil oder für (z. B. auf einer Palette (46) angeordnete) Bauteile, wobei die Gießkammer eine Einzelkammer darstellt oder drei durch Trennwände voneinander getrennte Kammern bildet (z. B. Vorkammer zum Einschleusen, Hauptkammer, Nachkammer zum Ausschleusen), dadurch gekennzeichnet, daß als Vergußmasse ein Einkomponentenmaterial, das bei Zimmertemperatur nicht, bei erhöhter Temperatur (z. B. 60° bis 80°C) jedoch innerhalb kurzer Zeit (z. B. innerhalb weniger als 30 Minuten) aushärtet, verwendet wird, daß der Dosiereinrichtung (30) eine Aufheizeinrichtung für die Vergußmasse, wie ein beheizbarer Mischer (138) nachgeorndet ist, die über ein Gießventil (42) in der Gießkammer (48) mündet, und daß der Gießkammer (48) ein Durchlaufofen (60) zum Aushärten der Masse in den Bauteilen unter Überdruck und erhöhter Temperatur nachgeschaltet ist, in welchen Durchlaufofen (60) die Transporteinrichtung (54) hinein-, hindurch-(154, 254, 354) und hinaus- (54) führt.

7. Vorrichtung nach Anspruch 6, dadurch gekennzeichnet, daß der Durchlaufofen (60) aus drei Kammern (z. B. Einschleusekammer (68), Hauptkammer (70), Ausschleusekammer (72)) besteht.

8. Vorrichtung nach einem der Ansprüche 6 bis 7, dadurch gekennzeichnet, daß die Schleusenkammern (68, 72) über eine Druckleitungseinrichtung (92, 94) miteinander verbunden sind, durch die ein (z.B. passives) Entlüften der einen Kammer in die andere Kammer ermöglicht wird.

9. Vorrichtung nach Anspruch 8, dadurch gekennzeichnet, daß in der die Schleusenkammer miteinander verbindenden Druckleitung eine Pumpeinrichtung vorgesehen ist, die in der einen Schleusenkammer enthaltende angewärmte Druckluft in die andere Schleusenkammer pumpt.

10. Vorrichtung nach einem der Ansprüche 6 bis 9, dadurch gekennzeichnet, daß die einzelnen Kammern (68, 70, 72) mit Heizeinrichtungen (214, 314, 414) verknüpft sind, die die Kammerwände (220, 320, 420) auf einer einstellbaren Temperatur halten.

11. Vorrichtung nach Anspruch 10, dadurch gekennzeichnet, daß die Einrichtungen aus einem die Kammer umschließen den Hohlraum (220, 320, 420) bestehen, an dessen einem Ende Heizmedium zugeführt wird (80), und an dessen anderem Ende (82) Heizmedium abgeführt wird.

12. Vorrichtung nach Anspruch 11, dadurch gekennzeichnet, daß bezüglich der Vorkammer und der Nachkammer (68, 72) das Ende, an dem das Heizmedium zugeführt wird (80 bzw. 480), dasjenige ist, an dem sich ein nach außen gerichtetes Tor (62 bzw. 78) befindet.

13. Vorrichtung nach einem der Ansprüche 6 bis 9, dadurch gekennzeichnet, daß Infrarotstrahler (103) vorgesehen sind, die zeitlich steuerbar zumindest eine Fläche (115) der auszuhärtenden Masse beaufschlagen.

14. Vorrichtung nach Anspruch 13, dadurch gekennzeichnet, daß ein Pyrometer (119) vorgesehen ist, das die Temperatur der Fläche (115) der auszuhärtenden Masse abtastet.

15. Vorrichtung nach Anspruch 13 oder 14, dadurch gekennzeichnet, daß Infrarotstrahler (103) und Pyrometer (119) über eine Steuereinrichtung, wie Mikroprozessor, zu einem Steuerkreis zusammengeschaltet sind, derart, daß die Fläche (115) der auszuhärtenden Masse innerhalb eines ersten vorgegebenen Zeitraums auf eine vorgegebene Temperatur erhitzt und dann diese Fläche für eine weitere vorgegebene Zeit auf dieser Temperatur gehalten wird,

16. Vorrichtung nach einem der Ansprüche 13 bis 15, dadurch gekennzeichnet, daß der Infrarotstrahler (103) aus mehreren, nebeneinader, jeweils koaxial zur Ofenachse (101) angeordneten Quarzröhren besteht, wobei die von den Quarzröhrenachsen aufgespannte Fläche im wesentlichen parallel zu und im Abstand von der Oberfläche (115) der auszuhärtenden Masse - die vorzugsweise parallel zur Erdoberfläche liegt - liegt.

17. Vorrichtung nach Anspruch 16, dadurch gekennzeichnet, daß der Meßwinkel (121) des Pyrometers (119) im spitzen Winkel (α) auf die Meßoberfläche weist.

## Claims

1. Method of casting and subsequently curing a component or several components, such as line transformers, with an impregnating mass and of curing the mass in an oven, the method comprising the following steps:
a) introducing a component or a pallet of several components into a casting chamber (48) that can be placed under vacuum,
b) creating a vacuum in the casting chamber (50),
c) using the mass under vacuum or at below atmospheric pressure to cast the component or several components - one after the other, as the case may be,
d) venting the casting chamber (56),
e) removing the component or the pallet (46) of several components and curing thereof in an oven,
characterised in that
the mass represents a single component mass, which does not harden at room temperature but does so within a short period (e.g. in less than 30 minutes) at increased temperature (e.g. 60° to 80°C), and the curing process is effected in an oven comprising three chambers in accordance with the following additional steps of the method:
f) the component or the pallet (46) holding several components is introduced into a gated oven pre-chamber (68) of the curing oven (60),
g) the gated oven pre-chamber is closed and brought to below atmospheric pressure (88),
h) the gated oven pre-chamber (68) is opened into a main oven chamber (70) and the component or pallet (46) of components is moved into the main oven chamber (70) and the main oven chamber closed,
i) the component or pallet (46) of components is passed through the main oven chamber, together with other components or other pallets of components as the case may be, synchronised with the introduction of additional components or pallets of components into the gated oven pre-chamber or the main oven chamber,
k) the main oven chamber is opened into a gated oven after-chamber and the component or pallet (46) of components is moved from the main oven chamber into the gated oven after-chamber and the gated oven after-chamber is closed,
l) the gated oven after-chamber is vented and the component or pallet of components is removed from the gated oven after-chamber.

2. Method as claimed in claim 1, characterised in that before casting or during casting (step c), the mass is heated, preferably by means of a heatable mixer (38) capable of producing a back-pressure, to a temperature approaching that at which the curing process is initiated and this heated mass is applied to a component or the components on a pallet.

3. Method as claimed in claim 1 or 2, characterised in that the process of passing through the main oven chamber (step h) is timed synchronously with the process of passing through the gated pre-chamber and the gated after-chamber.

4. Method as claimed in claim 3, characterised in that between the gated pre-chamber and the gated after-chamber the pressurised and heated gas located within the chambers is pumped around at an appropriately timed rate.

5. Method as claimed in one of claims 2 to 4, characterised in that air vented (90, 290) from the gated chambers is recirculated in order to recuperate the heat and pressure.

6. Device for casting a component or each of several components, such as line transformers, with an impregnating mass and for curing the mass in an oven, consisting of a supply container (10) for the casting mass, a metering device (30) co-operating with the supply container (10) and opening into a casting chamber (48), preferably one which can be placed under vacuum, above the component to be cast or the components to be cast, a conveying device (54) for the component or components (e.g. arranged on a pallet (46)) which passes through the casting chamber (48), whereby the casting chamber is a single chamber or three chambers separated from one another by dividing walls (e.g. gated pre-chamber, main chamber, gated after-chamber), characterised in that a single-component material is used which does not cure at room temperature but does so at increased temperature (e.g. 60° to 80°C) within a short time (e.g. in less than 30 minutes), a device for heating the casting mass is arranged after the metering device (30), such as a heatable mixer (138), opening into the casting chamber (48) by means of a casting valve (42), and the casting chamber (48) connects with a continuous oven (60) for curing the mass in the components at a pressure above atmospheric pressure and at increased temperature, whereby the conveying device (54) passes into, through (154, 254, 354) and out of (54) the continuous oven.

7. Device as claimed in claim 6, characterised in that the continuous oven (60) consists of three chambers (e.g. gating-in chamber (68), main chamber (70), gating-out chamber (72)).

8. Device as claimed in one of claims 6 to 7, characterised in that the gated chambers (68, 72) connect with one another by means of a pressure delivery device (92, 94), by means of which venting (e.g. passive) is possible from one chamber into the other chamber.

9. Device as claimed in claim 8, characterised in that a pumping device is incorporated on the pressure pipe linking the gated chambers with one another, which pumps heated, pressurised air contained in one gated chamber into the other gated chamber.

10. Device as claimed in one of claims 6 to 9, characterised in that the individual chambers (68, 70, 72) are linked to heating devices (214, 314, 414), which keep the chamber walls (220, 320, 420) at an adjustable temperature.

11. Device as claimed in claim 10, characterised in that the devices are cavities (220, 320, 420) surrounding the chambers, such that a heating medium is fed through from one end (80) and heating medium is fed out at the other end (82).

12. Device as claimed in claim 11, characterised in that with respect to the pre-chamber and the after-chamber (68, 72), the end at which the heating medium is fed in (80 or 480) is that at which an outwardly facing gate (62 or 78) is located.

13. Device as claimed in one of claims 6 to 9, characterised in that infra-red radiators (103) are provided, which can be timed such as to be applied to at least one surface (115) of the mass to be cured.

14. Device as claimed in claim 13, characterised in that a pyrometer (1190 is provided, which senses the temperature of the surface (115) of the mass to be cured.

15. Device as claimed in claim 13 or 14, characterised in that the infra-red radiators (103) and pyrometer (119) are connected to a control circuit by means of a control device, such as a micro-processor, such that the surface (115) of the mass to be cured is heated within a first pre-determined period to a pre-determined temperature and this surface is then held at this temperature for a further pre-determined time.

16. Device as claimed in one of claims 13 to 15, characterised in that the infra-red radiator (103) consists of several quartz pipes arranged adjacent to one another, each coaxial with the axis of the oven (101), such that the surface spanned by the axes of the quartz pipes lies essentially parallel with and at a distance from the surface (115) of the mass to be cured - which lies by preference parallel with the surface of the ground.

17. Device as claimed in claim 16, characterised in that the measuring angle (121) of the pyrometer (119) is directed at an acute angle (α) onto the measuring surface.

## Revendications

1. Procédé pour la coulée et le durcissement consécutif d'une ou de plusieurs pièces, telles que des transformateurs de balayage, avec une masse d'imprégnation et pour le durcissement de la masse dans un four, constitué par les étapes de procédé suivantes:
a) introduction d'une pièce ou d'une palette de plusieurs pièces dans une chambre de coulée (48) pouvant être mise sous vide,
b) mise sous vide de la chambre de coulée (50),
c) coulée de ta pièce ou des pièces - le cas échéant successivement - avec la masse sous dépression ou sous vide,
d) aération de la chambre de coulée (56),
e) évacuation de la pièce ou de la palette (46) comportant plusieurs pièces et durcissement dans un four,
caractérisé en ce que la masse est une masse à un seul composant qui ne durcit pas à température ambiante mais qui durcit rapidement (par exemple en moins de 30 minutes) à une température plus élevée (par exemple entre 60 et 80 °C) et en ce que le durcissement est réalisé dans un four comportant 3 chambres selon les étapes de procédé suivantes:
f) introduction de la pièce ou de la palette (46) comportant plusieurs pièces dans un sas de four (68) situé avant le four de durcissement (60),
g) fermeture du sas et mise sous pression de celui-ci (88),
h) ouverture du sas (68) situé avant la chambre principale (70) du four et introduction de la pièce ou de la palette (46) de pièces dans la chambre principale du four (70) et fermeture de la chambre principale,
i) passage de la pièce ou de la palette de pièces (46) à travers la chambre principale du four, le cas échéant avec d'autres pièces ou palette de pièces, en synchronisation avec l'introduction d'autres pièces ou palettes de pièces dans le sas situé avant la chambre principale ou dans la chambre principale du four,
k) ouverture de la chambre principale du four vers un sas situé derrière le four et sortie de la pièce ou de la palette de pièces (46) de la chambre principale vers le sas situé derrière le four et fermeture du sas situé derrière le four,
l) aération du sas situé derrière le four et évacuation de la pièce ou de la palette de pièces du sas situé derrière le four.

2. Procédé selon la revendication 1, caractérisé en ce qu'on chauffe, avant la coulée ou pendant la coulée (étape c), de préférence à l'aide d'un mélangeur (38) pouvant être chauffé et mis sous pression dynamique, la masse pratiquement à la température à laquelle le processus de durcissement démarre et en ce qu'on alimente cette masse chauffée dans une pièces ou les pièces sur la palette.

3. Procédé selon la revendication 1 ou 2, caractérisé en ce que le passage à travers la chambre principale du four (étape h) est réalisée de manière synchrone avec le passage dans le sas situé avant et celui situé derrière la chambre principale du four.

4. Procédé selon la revendication 3, caractérisé en ce qu'entre le sas avant et derrière la chambre principale, on met en circulation le gaz se trouvant dans les chambres sous pression et chauffé selon un cycle adéquat.

5. Procédé selon une quelconque des revendications 2 à 4, caractérisé en ce que l'air d'aération (90, 290) sortant des sas est remis en circulation pour la récupération de l'énergie thermique et de pression.

6. Dispositif pour la coulée d'une pièce ou de plusieurs pièces, tels que des transformateurs de balayage, avec une masse imprégnée et pour le durcissement de la masse dans un four, constitué par un récipient (10) pour la masse à couler, par un dispositif de dosage (30) situé après le récipient (10) qui débouche dans une chambre de coulée (48) dans laquelle on peut dc préférence faire le vide, au-dessus de la pièce ou des pièces à couler par un dispositif de transport (54) passant à travers la chambre de coulée (48) pour la pièce ou des pièces (par exemple placées sur une palette (46)), la chambre de coulée étant constituée par une seule chambre ou par trois chambres séparées par des parois de séparation (par exemple une chambre pour l'introduction, une chambre principale, une chambre pour l'évacuation), caractérisé en ce qu'on utilise comme masse de coulée un matériau à un seul composant qui ne durcit pas à température ambiante mais qui durcit rapidement (par exemple en moins de 30 minutes) à température plus élevée (par exemple entre 60 et 80 °C), en ce qu'on dispose derrière le dispositif de dosage (30) un dispositif de chauffage pour la masse à couler, tel qu'un mélangeur pouvant être chauffé (138), qui débouche via une soupape de coulée (42) dans la chambre de coulée (48) et en ce qu'on dispose derrière la chambre de coulée (48) un four continu (60) pour le durcissement de la masse dans les pièces sous pression et à température élevée, le dispositif de transport (54) entrant, passant dans (154, 254, 354) et sortant (54) du four continu (54).

7. Dispositif selon la revendication 6, caractérisé en ce que le four continu (60) est constitué par trois chambres (par exemple un sas d'introduction (68), une chambre principale (70) et un sas d'évacuation (72)).

8. Dispositif selon une quelconque des revendications 6 à 7, caractérisé en ce que les sas (68, 72) sont reliés l'un à l'autre via un dispositif de conduite sous pression (92, 94) qui permet d'aérer (passivement) une chambre dans l'autre chambre

9. Dispositif selon la revendication 8, caractérisé en cc qu'on a prévu dans la conduite sous pression reliant les sas un dispositif de pompage qui pompe l'air comprimé chauffé contenu dans un sas dans l'autre sas.

10. Dispositif selon une quelconque des revendications 6 à 9, caractérisé en ce que les différentes chambres (68, 70, 72) sont reliées à des dispositifs de chauffage (214, 314, 414) qui maintiennent les parois des chambres (220, 320, 420) à une température qui peut être réglée.

11. Dispositif selon la revendication 10, caractérisé en ce que les dispositifs sont constitués par un espace creux (220, 320, 420) qui entoure la chambre et en l'extrémité duquel on alimente une agent caloporteur (80) qui est évacué en l'autre extrémité (82).

12. Dispositif selon la revendication 11, caractérisé en ce que l'extrémité (80 ou 480) dans laquelle on alimente l'agent caloporteur, par rapport aux sas situés avant et derrière la chambre (68, 72), est l'extrémité qui comporte une porte (62 ou 78) dirigée vers l'extérieur.

13. Dispositif selon une quelconque des revendications 6 à 9, caractérisé en ce qu'on a prévu des émetteurs de rayons infrarouges (103) qui chauffent de manière réglable dans le temps au moins une surface (115) de la masse à durcir.

14. Dispositif selon la revendication 13, caractérisé en ce qu'on a prévu un pyromètre (119) qui enregistre la température de la surface (115) de la masse à durcir.

15. Dispositif selon la revendication 13 ou 14, caractérisé en ce que l'émetteur de rayons infrarouges (103) et le pyromètre (119) sont connectés via un dispositif de commande, tel qu'un microprocesseur, pour former un circuit de commande de telle manière que la surface (115) de la masse à durcir est chauffée pendant une première période prédéfinie à une température donnée et que cette surface est ensuite maintenue à cette température pendant une autre période prédéfinie.

16. Dispositif selon une quelconque des revendications 13 à 15, caractérisé en ce que l'émetteur de rayons infrarouges (103) est constitué par plusieurs tubes à quartz placés l'un à côté de l'autre et coaxialement par rapport à l'axe du four (101), la surface formée par les axes des tubes à quartz étant située à une certaine distance de la surface (115) de la masse à durcir en étant essentiellement parallèle à celle-ci, cette dernière étant de préférence parallèle à la surface du sol.

17. Dispositif selon la revendication 16, caractérise en ce que l'angle de mesure (121) du pyromètre (119) forme un angle aigu (α) par rapport à la surface de mesure.
